# EUROPEAN PATENT APPLICATION

(11) **EP 4 393 553 A1**
(43) Date of publication of application: **03.07.2024**
(21) Application number: 22871576.9
(22) Date of filing: 13.07.2022
(51) Int. Cl.: A62B 35/00

(54) **ANTI-FALLING DEVICE**

(30) Priority: 24.09.2021 CN 202111122539
(71) Applicant: Ficont Industry (Beijing) Co., Ltd., Beijing 101106 (CN)
(72) Inventor: SONG, Yongqiang, Beijing 101106 (CN); YU, Zhanjiang, Beijing 101106 (CN); WEI, Yanan, Beijing 101106 (CN); SONG, Ranran, Beijing 101106 (CN)
(74) Representative: Wang, Bo
(86) International application number: PCT/CN2022/105575
(87) International publication number: WO 2023/045517

(57) **Abstract**

The present invention relates to the field of safety and protection technologies, and provides a fall protection apparatus, including: a first cover plate and a second cover plate opposite each other; a rope clamping member located between the first cover plate and the second cover plate and provided with a limit groove as well as a locking position and an unlocking position; a shifting button having a first end connected to the rope clamping member and a second end penetrating through the first cover plate and partially exposed from the first cover plate; and a brake assembly including a pressing portion, a connecting portion, and a brake portion that are connected sequentially, where the pressing portion is at least partially exposed from the second cover plate. When the brake assembly is in an initial state, the brake portion limitedly fits with the limit groove to fix the rope clamping member; and when the brake assembly is in a pressed state, the brake portion is separated from the limit groove and the shifting button is suitable for driving the rope clamping member to switch between the locking position and the unlocking position. When the fall protection apparatus is operated, action forces need to be respectively applied from two sides of the fall protection apparatus to the shifting button and the pressing portion, avoiding a mis-operation and preventing the fall protection apparatus from falling off accidentally, thus ensuring operation safety.

## Description

### FIELD OF TECHNOLOGY

The present invention relates to the field of safety and protection technologies, and in particular to, a fall protection apparatus.

### BACKGROUND

Currently, with social development, high-altitude operations are quite common, especially in the field of wind power generation. In addition, certain protective measures are required during the climbing on the ladder. Conventional protective facility is expensive and inconvenient to use, and occupies a large space. In this case, a fall protection apparatus that can be mounted to a steel wire rope has been developed. In the fall protection apparatus of the related art, the state switching and braking of the rope clamping member are both achieved using a part. As a result, a mis-operation may be performed, leading to a risk that the fall protection apparatus accidentally falls off.

### SUMMARY

The present invention is intended to resolve at least one of the technical problems in the related art. For this, the present invention provides a fall protection apparatus of which a brake assembly and a shifting button are independent of each other and located on two sides of the fall protection apparatus, thus avoiding a mis-operation and ensuring operation safety.

According to an embodiment of a first aspect of the present invention, a fall protection apparatus is provided, including:
a first cover plate and a second cover plate opposite each other;
a rope clamping member located between the first cover plate and the second cover plate, where the rope clamping member is provided with a limit groove, and the rope clamping member is provided with a locking position and an unlocking position;
a shifting button, where a first end of the shifting button is fixedly connected to the rope clamping member, and a second end of the shifting button penetrates through the first cover plate and is at least partially exposed from the first cover plate; and
a brake assembly, where the brake assembly includes a pressing portion, a connecting portion, and a brake portion that are connected sequentially, and the pressing portion is at least partially exposed from the second cover plate; where
when the brake assembly is in an initial state, the brake portion limitedly fits with the limit groove to fix the rope clamping member; and when the brake assembly is in a pressed state, the brake portion is separated from the limit groove and the shifting button is suitable for driving the rope clamping member to switch between the locking position and the unlocking position.

According to the fall protection apparatus in this embodiment of the present invention, the shifting button is at least partially exposed from the first cover plate, the pressing portion of the brake assembly is at least partially exposed from the second cover plate, and the first cover plate and the second cover plate are opposite each other. Therefore, when the fall protection apparatus is operated, action forces need to be respectively applied from two sides of the fall protection apparatus to the shifting button and the pressing portion, avoiding a mis-operation and preventing the fall protection apparatus from falling off accidentally, thus ensuring operation safety.

According to an embodiment of the present invention, the fall protection apparatus further includes a mounting block, the pressing portion, the connecting portion, and the brake portion are mounted at the mounting block, and the mounting block is mounted in correspondence to an end portion of the first cover plate and an end portion of the second cover plate.

According to an embodiment of the present invention, a first protrusion and a second protrusion are respectively formed at edges on two opposite sides of the mounting block, the first protrusion is connected to an edge of the first cover plate, and the second protrusion is connected to an edge of the second cover plate.

According to an embodiment of the present invention, the connecting portion is sleeved with a first elastic member, and the first elastic member has a first end abutting against the mounting block and a second end abutting against the pressing portion; and in the pressed state, the first elastic member is elastically deformed.

According to an embodiment of the present invention, the rope clamping member is connected to one end of a second elastic member, and the other end of the second elastic member abuts against the first cover plate.

The mounting block is provided with a stop plate, and an accommodating chamber of the second elastic member is formed between the stop plate and the first cover plate.

According to an embodiment of the present invention, the mounting block includes a first mounting block disposed at the top of the first cover plate and the second cover plate and a second mounting block disposed at the bottom of the first cover plate and the second cover plate.

the pressing portion, the connecting portion, and the brake portion are mounted at the first mounting block and/or the second mounting block.

According to an embodiment of the present invention, one of the mounting block and the rope clamping member is provided with a pin shaft, and the other is provided with slots, and the pin shaft is suitable for partially entering the slot when the fall protection apparatus is mounted reversely.

According to an embodiment of the present invention, the slots are provided at an end of the rope clamping member close to the second mounting block, and the pin shaft is movably disposed at the second mounting block.

According to an embodiment of the present invention, the slots include a first slot and a second slot. At the locking position, the first slot corresponds to the pin shaft, and at the unlocking position, the second slot corresponds to the pin shaft.

According to an embodiment of the present invention, the pressing portion, the connecting portion, and the brake portion are all cylinder-shaped, and a diameter of the connecting portion is smaller than a diameter of the pressing portion and a diameter of the brake portion.

Additional aspects and advantages of the present invention will be partly provided in the following description, and partly become evident in the following description or understood through the practice of the present invention.

### BRIEF DESCRIPTION OF THE DRAWINGS

In order to more clearly describe technical solutions in the embodiments of the present prevention or in the related art, a brief introduction to the accompanying drawings required for the description of the embodiments or the related art will be provided below. Obviously, the accompanying drawings described below are merely some embodiments of the present prevention. Those of ordinary skill in the art would also be able to derive other accompanying drawings from these accompanying drawings without making inventive efforts.
FIG. 1 is a schematic structural diagram of a fall protection apparatus in the related art, where a shifting button is clamped in a cover body;
FIG. 2 is a schematic diagram of a dimensional structure of a fall protection apparatus according to an embodiment of the present invention, where a first cover plate is removed;
FIG. 3 is a schematic diagram of a dimensional structure of a fall protection apparatus according to an embodiment of the present invention;
FIG. 4 is a schematic structural diagram of a brake assembly according to an embodiment of the present invention;
FIG. 5 is a schematic front view of a fall protection apparatus according to an embodiment of the present invention, where a first cover plate is removed;
FIG. 6 is a schematic structural diagram of a fall protection apparatus being inverted according to an embodiment of the present invention, where a pin shaft fits with the first slot;
FIG. 7 is a schematic diagram of a second elastic member being mounted at a perspective according to an embodiment of the present invention;
FIG. 8 is a schematic diagram of the second elastic member being mounted at another perspective according to an embodiment of the present invention; and
FIG. 9 is a schematic diagram of the second elastic member being mounted at still another perspective according to an embodiment of the present invention.

In the drawings: 1, second cover plate;
2, brake assembly; 2.1, mounting block; 2.1.1, stop plate; 2.1.2, first protrusion; 2.1.4, first mounting block; 2.1.5, second mounting block; 2.2, brake portion; 2.3, first elastic member; 2.4, pressing portion; 2.5, connecting portion; 2.6, brake shaft;
3.1, first cover plate; 3.2, rope clamping member; 3.2.1, first slot; 3.2.2, second slot; 3.2.3, guide groove; 3.2.4, limit groove; 3.3, shifting button; 3.4, second elastic member; 3.5, guide pillar;
4, pin shaft;
5, cover body; and 8, main body.

### DESCRIPTION OF THE EMBODIMENTS

The implementations of the present invention are further described below in detain with reference to the accompanying drawings and embodiments. The following embodiments are used to describe the present invention instead of limiting the scope of the present invention.

In the description of the embodiments of the present invention, it should be noted that the terms "central", "longitudinal", "transverse", "upper", "lower", "front", "back", "left", "right", "vertical", "horizontal", "top", "bottom", "inner", "outer", and the like indicate azimuthal or positional relations on the basis of those shown in the drawings only for ease of description of the embodiments of the present invention and for simplicity of description, and are not intended to indicate or imply that the referenced device or element must have a particular orientation and be constructed and operative in a particular orientation, and thus may not be construed as a limitation on the embodiments of the present invention. In addition, the terms "first", "second", and "third" are merely for description and shall not be understood as any indication or implication of relative importance.

In the description of the embodiments of the present invention, it should be noted that, unless otherwise explicitly specified and defined, the terms "connecting" and "joining" should be understood in a broad sense, for example, they may be a fixed connection, a detachable connection, or an integrated connection; may be a mechanical connection or an electrical connection; or may be a direct connection, or an indirect connection via an intermediate medium. A person of ordinary skill in the art can understand specific meanings of these terms in the embodiments of the present inventions based on specific situations.

In the embodiments of the present invention, unless otherwise explicitly specified and limited, that the first feature is "above" or 'below' the second feature may mean direct contact between the first and second features or indirect contact between the first feature and the second feature through an intermediate medium. Moreover, that the first feature is "on", "above", or "on top of' the second feature may mean that the first feature is directly or obliquely above the second feature, or only means that the level of the first feature is higher than the level of the second feature. That the first feature is "under", "below", or "beneath" the second feature may mean that the first feature is directly or obliquely below the second feature, or only means that the level of the first feature is lower than the level of the second feature.

In the description of this specification, the description with reference to the terms such as "one embodiment", "some embodiments", "an example", "a specific example", or "some examples" means that the specific features, structures, materials, or characteristics described with reference to the embodiment or example are included in at least one of the embodiments or example of the present invention. In the specification, the schematic description of the above terms does not necessarily refer to the same embodiment or example. Furthermore, the specific feature, structure, material, or characteristic described may be combined in a suitable manner in any one or more of embodiments or examples. In addition, those skilled in the art may combine different embodiments or examples described in this specification and characteristics of the different embodiments or examples without mutual contradiction.

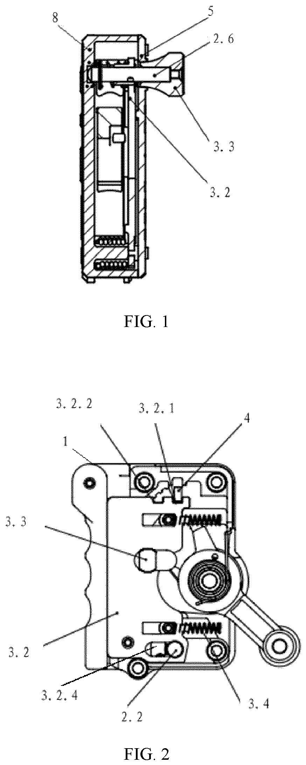

Referring to FIG. 1, in the related art, a fall protection apparatus includes parts such as a main body 8, a cover body 5, a brake shaft 2.6, a shifting button 3.3, a rope clamping member 3.2, a swing rod, and a lock block. The shifting button 3.3 is mounted on a rotation shaft, in an initial position, the brake shaft 2.6 limitedly fits with the main body 8, and the shifting button 3.3 is clamped in the cover body 5 and cannot be slid. When the rope clamping member 3.2 of the fall protection apparatus needs to be opened, the shifting button 3.3 is pulled out and slid, and the brake shaft 2.6 drives the rope clamping member 3.2 to rotate, so as to be opened. In this case, the steel wire rope may be mounted in a mounting groove of the fall protection apparatus. An elastic resetting member is mounted between the brake shaft 2.6 and the rope clamping member 3.2, and a torsion spring is mounted on a side of the rope clamping member 3.2 back away from the mounting groove. After hands are off, the torsion spring drives the rope clamping member 3.2 to automatically spring back to the original position, and the elastic resetting member drives the brake shaft 2.6 to automatically spring back to a position where it limitedly fits with the main body 8.

This operation process of the fall protection apparatus includes two operation steps: a step of pulling the shifting button 3.3 outward and a step of sliding the shifting button 3.3. Because the shifting button 3.3 is directly involved in the foregoing two operation steps, a mis-operation may be performed. For example, when a user falls off accidentally, the fall protection effect could be achieved using the fall protection apparatus, but the user is nervous and may accidentally trigger the shifting button 3.3, opening the rope clamping member 3.2, which thus leads to a safety accident.

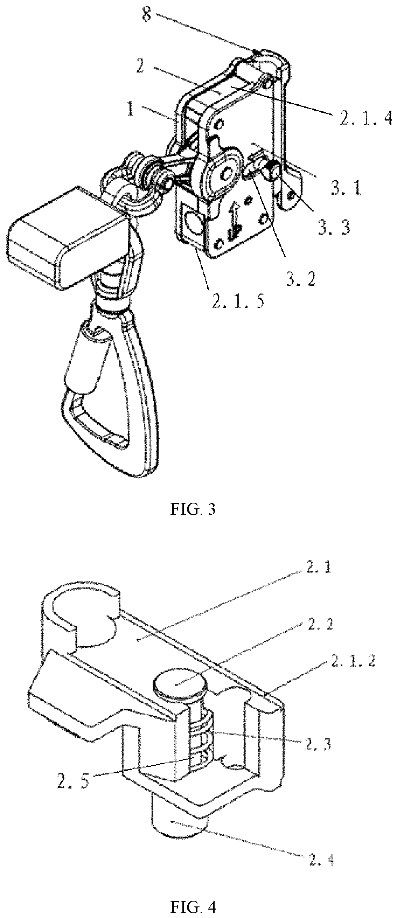

In view of the problem of the mis-operation in the related art, referring to FIGs. 2 and 3, according to an embodiment of the present invention, a fall protection apparatus is provided, including a first cover plate 3.1 and a second cover plate 1 opposite each other. In addition, the apparatus further includes a rope clamping member 3.2, a shifting button 3.3, and a brake assembly 2.

In FIGs. 2 and 3, a mounting space is formed between the first cover plate 3.1 and the second cover plate 1, so as to place the rope clamping member 3.2 in the mounting space. The mounting space between the first cover plate 3.1 and the second cover plate 1 is not limited herein as long as when the rope clamping member 3.2 is disposed between the first cover plate 3.1 and the second cover plate 1, the first cover plate 3.1 and the second cover plate 1 can protect the rope clamping member 3.2. Certainly, in addition to the rope clamping member 3.2, another conventional part of the fall protection apparatus may be mounted in the mounting space, for example, a swing rod and a lock block. A first end of the shifting button 3.3 is fixedly connected to the rope clamping member 3.2, and a second end of the shifting button 3.3 penetrates through the first cover plate 3.1 and is at least partially exposed from the first cover plate 3.1. In FIG. 3, the first end of the shifting button 3.3 is its left end, and the second end of the shifting button 3.3 is its right end. Further, the rope clamping member 3.2 is mounted in the mounting space between the first cover plate 3.1 and the second cover plate 1, but the position of the rope clamping member 3.2 can be switched using the shifting button 3.3 at least partially exposed from the first cover plate 3.1.

In FIG. 2, the rope clamping member 3.2 is provided with a limit groove 3.2.4. Referring to FIG. 4, the brake assembly 2 includes a pressing portion 2.4, a connecting portion 2.5, and a brake portion 2.2 that are connected sequentially, and the pressing portion 2.4 is at least partially exposed from the second cover plate 1. An action force is applied to the pressing portion 2.4, such that the connecting portion 2.5 drives the brake portion 2.2 to move. The operation on the pressing portion 2.4 enables the brake assembly 2 to switch between an initial state and a pressed state. As shown in FIG. 2, in the initial state, the brake portion 2.2 limitedly fits with the limit groove 3.2.4 to fix the rope clamping member 3.2, such that even an action force is applied to the shifting button 3.3, the position of the rope clamping member 3.2 cannot be switched. In the pressed state, the brake portion 2.2 is separated from the limit groove 3.2.4 (being "separated" herein refers to a case where the limited fitting between the brake portion 2.2 and the limit groove 3.2.4 is released). In addition, the connecting portion 2.5 may be located in the limit groove 3.2.4, such that the shifting button 3.3 can drive the rope clamping member 3.2 to move along the length direction of the limit groove 3.2.4.

The rope clamping member 3.2 is at least provided with the locking position and the unlocking position. When the rope clamping member 3.2 is located at the unlocking position, the fall protection apparatus may be mounted to the steel wire rope or removed off the steel wire rope. When the rope clamping member 3.2 is located at the locking position, the fall protection apparatus may be fixed to the steel wire rope, thus achieving the fall protection effect.

According to an embodiment of the present invention, the shifting button 3.3 is at least partially exposed from the first cover plate 3.1, the pressing portion 2.4 of the brake assembly 2 is at least partially exposed from the second cover plate 1, and the first cover plate 3.1 and the second cover plate 1 are opposite each other. Therefore, when the fall protection apparatus is operated, action forces need to be respectively applied from two sides of the fall protection apparatus to the shifting button 3.3 and the pressing portion 2.4, avoiding a mis-operation and preventing the fall protection apparatus from falling off accidentally, thus ensuring operation safety.

According to an embodiment of the present invention, the second cover plate 1 may be regarded as the main body 8 in the embodiments of the present invention, and the main body 8 may be integrated with another part of the fall protection apparatus.

In FIG. 4, the pressing portion 2.4 is independent of the connecting portion 2.5 and the brake portion 2.2. In addition, the pressing portion 2.4 may be arranged as a button which is detachable with respect to the connecting portion 2.5, and the connecting portion 2.5 and the brake portion 2.2 are integrated to obtain a brake rod. Certainly, the pressing portion 2.4, the connecting portion 2.5, and the brake portion 2.2 may be alternatively integrated and shaped.

According to an embodiment of the present invention, referring to FIG. 4, the brake assembly 2 further includes a mounting block 2.1. The pressing portion 2.4, the connecting portion 2.5, and the brake portion 2.2 are mounted at the mounting block 2.1, and the mounting block 2.1 is mounted in correspondence to the end portions of the first cover plate 3.1 and the second cover plate 1. In this case, the mounting block 2.1 has a protection function for the end portion of the fall protection apparatus and a mounting function of the brake assembly 2. The structure form of the mounting block 2.1 is not required particularly as long as the mounting block 2.1 can be mounted between the first cover plate 3.1 and the second cover plate 1, and the mounting space between the end of the first cover plate 3.1 and the second cover plate 1 is blocked and protected. The mounting block 2.1 and the second cover plate 1 may be alternatively integrated and shaped. On each mounting block 2.1, only one pressing portion 2.4, one connecting portion 2.5, one brake portion 2.2 may be mounted, or multiple pressing portions 2.4, connecting portions 2.5, and brake portions 2.2 may be alternatively mounted.

Further, referring to FIG. 4, a first protrusion 2.1.2 and a second protrusion (not shown in the figure) are respectively formed at edges on two opposite sides of the mounting block 2.1, the first protrusion 2.1.2 is connected to an edge of the first cover plate 3.1, and the second protrusion is connected to an edge of the second cover plate 1. In this case, no gap is present between the mounting block 2.1 and the first cover plate 3.1 and between the mounting block 2.1 and the second cover plate 1, preventing external impurities from entering the mounting space via the gaps, thus ensuring a clean interior of the mounting space.

In FIG. 4, the connecting portion 2.5 is sleeved with a first elastic member 2.3. Further, under the action of the first elastic member 2.3, the brake assembly 2 is switched between the pressed state and in the initial state. The first end of the first elastic member 2.3 may abut against the mounting block 2.1 and the second end may abut against the pressing portion 2.4. In FIG. 4, the first end of the first elastic member 2.3 refers to the upper end of the first elastic member 2.3, and the second end of the first elastic member 2.3 refers to the lower end of the first elastic member 2.3. Thereby, when a pressing force is applied to the pressing portion 2.4, the pressing portion 2.4 compresses the first elastic member 2.3, allowing the brake assembly 2 to be in the pressed state. In this case, the brake portion 2.2 is separated from the limit groove 3.2.4, such that the shifting button 3.3 drives the rope clamping member 3.2 to move along the length direction of the limit groove 3.2.4. When the action force on the pressing portion 2.4 is canceled, because the first elastic member 2.3 is elastically deformable, the brake assembly 2 is restored to the initial state under the action of the first elastic member 2.3. In addition, the brake portion 2.2 limitedly fits with the limit groove 3.2.4. The first elastic member 2.3 may be but is not limited to an air spring, a disc spring, or a pressure-spring.

In an embodiment, the pressing portion 2.4, the connecting portion 2.5, and the brake portion 2.2 are all cylinder-shaped, and a diameter of the connecting portion 2.5 is smaller than a diameter of the pressing portion 2.4 and a diameter of the brake portion 2.2. In this case, the brake assembly 2 is of a simple structure and convenient to process. In addition, a limit step is formed between the pressing portion 2.4 and the connecting portion 2.5 and between the connecting portion 2.5 and the brake portion 2.2, thus facilitating the limited mounting of the brake assembly 2. For example, the limit step between the pressing portion 2.4 and the connecting portion 2.5 facilitates the mounting of the first elastic member 2.3. For another example, the limit step between the connecting portion 2.5 and the brake portion 2.2 can limit the initial state of the brake assembly 2.

According to an embodiment of the present invention, the structure of the brake portion 2.2 is not limited as along as it can limitedly fit with the limit groove 3.2.4. For example, the brake portion 2.2 may be cylinder-shaped, and its cross section may be circular or rectangular, or in another shape. Correspondingly, the limit groove 3.2.4 fits with the brake portion 2.2 in shape. In this case, when the brake portion 2.2 is located in the limit groove 3.2.4, the shifting button 3.3 cannot drive the rope clamping member 3.2 to move.

According to an embodiment of the present invention, the rope clamping member 3.2 may be of any structure disclosed in the prior art as long as the position change of the rope clamping member 3.2 can facilitate the disassembly and assembly of the fall protection apparatus. For example, in FIG. 2, the rope clamping member 3.2 is of a structure of a movable plate.

According to an embodiment of the present invention, parts (which do not include the mounting block 2.1) forming the brake assembly 2 may be mounted at the mounting block 2.1 or the cover plates (unless specified particularly, the cover plates refer to the first cover plate 3.1 and the second cover plate 1) as long as brake fitting is achieved between the brake portion 2.2 of the brake assembly 2 and the limit groove 3.2.4.

In an embodiment, the second cover plate 1 is integrated with a mounting portion of the steel wire rope. The second cover plate 1 and the mounting block 2.1 are separate, such that the brake assembly 2 is assembled, and then the mounting block 2.1 of the brake assembly 2 is mounted to the second cover plate 1, thus facilitating the assembly of the fall protection apparatus and ensuring the assembly effect.

According to an embodiment of the present invention, the mounting block 2.1, the first cover plate 3.1, and the second cover plate 1 may be regarded as a housing the fall protection apparatus. Referring to FIG. 3, the mounting block 2.1 may include a first mounting block 2.1.4 disposed at the top of the first cover plate 3.1 and the second cover plate 1 and a second mounting block 2.1.5 disposed at the bottom of the first cover plate 3.1 and the second cover plate 1.

According to an embodiment of the present invention, one or two brake assemblies 2 may be provided, and even more than two brake assemblies 2 are provided in a case of meeting the requirement for user operations. When one brake assembly 2 is provided, only one finger is needed to operate the brake assembly 2, making the operation convenient and labor-saving. When two brake assemblies 2 are provided, they can be apart from each other at different positions. Therefore, the pressing portions 2.4 of the two brake assemblies 2 need to be pressed at the same time to allow the two brake assemblies 2 to be in the pressed state, thus driving the rope clamping member 3.2.

In an embodiment, the fall protection apparatus includes a brake assembly 2. Referring to FIG. 3, the brake assembly 2 is disposed at the top of the fall protection apparatus and mounted at the mounting block 2.1 at the top of the fall protection apparatus. In this case, it is convenient to operate the fall protection apparatus with only one finger controlling the brake assembly to switch in state. Certainly, the brake assembly may be alternatively mounted at a second mounting block 2.1.5.

In another embodiment, the fall protection apparatus includes two brake assemblies 2 (the case of the fall protection apparatus including two brake assemblies 2 is not shown in the figure), and the two brake assemblies 2 are respectively a first brake assembly disposed at the top of the first cover plate 3.1 and the second cover plate 1 and a second brake assembly disposed at the bottom of the first cover plate 3.1 and the second cover plate 1. The first brake assembly may be mounted at the first mounting block 2.1.4, and the second brake assembly is mounted at the second mounting block 2.1.5. The shifting button 3.3 is located between the two brake assemblies 2, thus ensuring a uniform action force on the rope clamping member 3.2 and preventing the rope clamping member 3.2 from tilting during movement.

In an embodiment, referring to FIG. 3, the shifting button 3.3 may be vertically fixed at a middle position of the rope clamping rope 3.2, such that an action force is applied to the shifting button 3.3 in the length direction of the limit groove 3.2.4, allowing the rope clamping member 3.2 to switch between the locking position and the unlocking position. When the fall protection apparatus is disassembled, one hand needs to press the first brake assembly and the second brake assembly at the same time, and the other hand operates the shifting button 3.3.

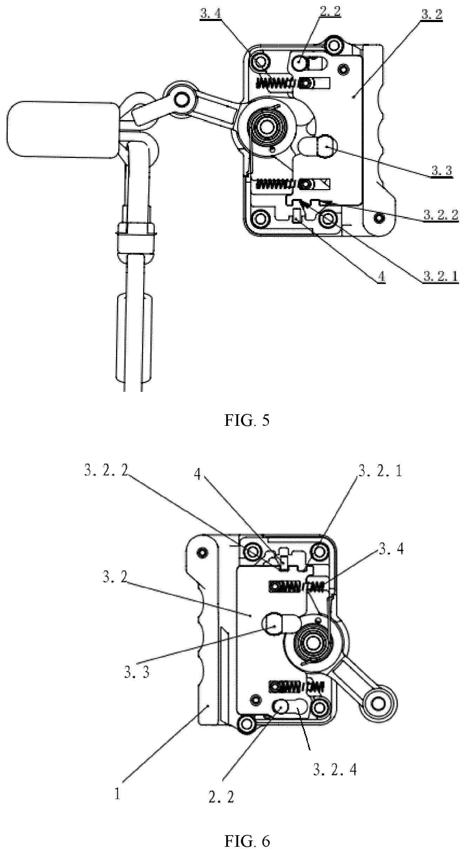

According to an embodiment of the present invention, referring to FIGs. 5 and 6, one of the mounting block 2.1 and the rope clamping member 3.2 is provided with a pin shaft 4, and the other is provided with slots (referring to a first slot 3.2.1 and the second slot 3.2.2 in FIG. 5). The pin shaft 4 is suitable for partially entering the slot when the fall protection apparatus is mounted reversely. Thus, when the fall protection apparatus is mounted reversely, the positions of the mounting block 2.1 and the rope clamping member 3.2 are fixed relatively. In this case, even the shifting button 3.3 is operated, the rope clamping member 3.2 cannot be driven to move, preventing the safety hazard due to the inverted fall protection apparatus. When the fall protection apparatus is mounted normally, the slot does not fit with the pin shaft 4, such that the fall protection apparatus can be disassembled or assembled normally. Regardless of the quantities of the mounting blocks 2.1 and the brake assemblies, the quantity and mounting position of the pin shaft 4 are not limited, as long as the pin shaft 4 can fit with the slot, thus avoiding the inverting effect.

Certainly, when one of the slot and the pin shaft 4 is mounted at the rope clamping member 3.2, the other is unnecessarily mounted at the mounting block 2.1. For example, the slot or the pin shaft 4 may be alternatively disposed at another part of the fall protection apparatus, as long as when the fall protection apparatus is mounted reversely, the fitting between the slot and the pin shaft 4 can prevent the rope clamping member 3.2 from switching between the locking position and the unlocking position.

According to an embodiment of the present invention, the slots (referring to the first slot 3.2.1 and the second slot 3.2.2 in FIG. 5) are provided at an end of the rope clamping member 3.2 close to the second mounting block 2.1.5, and the pin shaft 4 is movably disposed at the second mounting block 2.1.5. Thus, when the fall protection apparatus is mounted normally, the pin shaft 4 is located in the second mounting block 2.1.5, and the rope clamping member 3.2 can switch its position under the drive of the shifting button 3.3. When the fall protection apparatus is mounted reversely, the pin shaft 4 partially enters the slot of the rope clamping member 3.2, to avoid the mounting of the fall protection apparatus. Certainly, the pin shaft 4 may be alternatively disposed at an end of the rope clamping member 3.2 close to the first mounting block 2.1.4, and the slots are provided at the first mounting block 2.1.4.

According to an embodiment of the present invention, referring to FIG. 5, the slots include a first slot 3.2.1 and a second slot 3.2.2. At the locking position of the rope clamping member 3.2, the first slot 3.2.1 corresponds to the pin shaft 4, and at the unlocking position of the rope clamping member 3.2, the second slot 3.2.2 corresponds to the pin shaft 4. In this case, even if the user switches the rope clamping member 3.2 from the locking position to the unlocking position to reversely mount the fall protection apparatus, because at the unlocking position, the second slot 3.2.2 corresponds to the pin shaft 4, the rope clamping member 3.2 can be fixed at the unlocking position, so as to prevent the rope clamping member 3.2 from clamping the steel wire rope or a flexible cable (including a rope, a chain, or the like made of another material) in another form. Thus, in a case of providing the first slot 3.2.1 and the second slot 3.2.2, the effect of double preventing reverse mounting can be achieved in different times. That is, in a case of not opening the rope clamping member 3.2, if the fall protection apparatus is inverted, the rope clamping member 3.2 cannot be opened consequently. In a case of opening the rope clamping member 3.2, if the fall protection apparatus is inverted, the rope clamping member 3.2 cannot be locked tightly. In summary, the fall protection apparatus, in a case of being inverted, cannot be mounted to the steel wire rope.

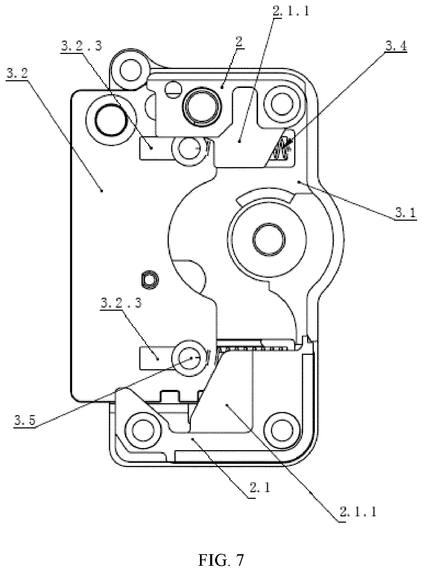

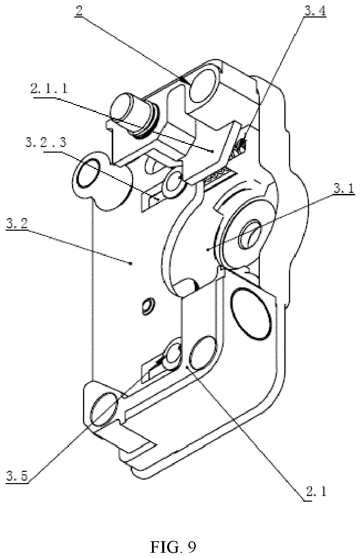

Referring to FIGs. 7 and 9, according to an embodiment of the present invention, the rope clamping member 3.2 is provided with two guide grooves 3.2.3, and the housing (the first cover plate 3.1) is provided with a guide pillar 3.5 fitting with the guide groove 3.2.3, such that the rope clamping member 3.2 moves along the length direction of the guide groove 3.2.3 when switching between the locking position and the unlocking position. The guide groove 3.2.3 is provided at the rope clamping member 3.2, and the rope clamping member 3.2 is hidden in the mounting space, thus ensuring the aesthetics of the fall protection apparatus. Certainly, the guide groove 3.2.3 may be alternatively provided in the first cover plate 3.1, and the guide pillar 3.5 is disposed on the rope clamping member 3.2.

In FIGs. 7 and 9, a second elastic member 3.4 is disposed between the rope clamping member 3.2 and the first cover plate 3.1, and the provision of the second elastic member 3.4 allows a natural position of the rope clamping member 3.2 to be the locking position. Under the action force of the shifting button 3.3, the rope clamping member 3.2 can be switched to the unlocking position. When the action on the shifting button 3.3 is canceled, the rope clamping member 3.2 is automatically reset to the locking position under the action of the second elastic member 3.4.

In an embodiment, the rope clamping member 3.2 is fixedly connected to an end of the second elastic member 3.4, and the other end of the second elastic member 3.4 abuts against the first cover plate 3.1. The first cover plate 3.1 may be provided with an open groove for mounting the second elastic member 3.4. The mounting block 2.1 is provided with a stop plate 2.1.1, and an accommodating chamber of the second elastic member 3.4 is formed between the stop plate 2.1.1 and the open groove of the first cover plate 3.1. Thus, after the mounting block 2.1 is mounted between the first cover plate 3.1 and the second cover plate 1, the second elastic member 3.4 can be closed relatively. The second elastic member 3.4 may be but is not limited to an air spring, a disc spring, or a pressure-spring.

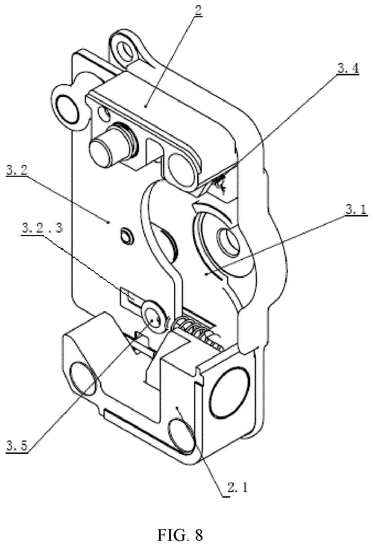

An embodiment of the present invention is described in detail below with reference to FIGs. 2 to 9.

Referring to FIGs. 2 to 9, the fall protection apparatus in this embodiment of the present invention includes a first cover plate 3.1 and a second cover plate 1. In addition, the apparatus further includes a mounting block 2.1 (a first mounting block 2.1.4) at the top of the fall protection apparatus and a mounting block 2.1 (a second mounting block 2.1.5) at the bottom of the fall protection apparatus. The first mounting block 2.1.4 is located between the top of the first cover plate 3.1 and the top of the second cover plate 1; and the second mounting block 2.1.5 is located at the bottom of the first cover plate 3.1 and the second cover plate 1. A mounting space is formed between the first cover plate 3.1, the second cover plate 1, the first mounting block 2.1.4, and the second mounting block 2.1.5. The first mounting block 2.1.4 is mounted with a button and a brake rod, and the second mounting block 2.1.5 is provided with no button and brake rod. The second mounting block 2.1.5 at the bottom is provided with an avoidance space of a guide wheel of the fall protection apparatus.

The first cover plate 3.1, the second elastic member 3.4, and the rope clamping member 3.2 are jointly assembled to the upper cover assembly, and then the button, the first elastic member 2.3, and the brake rod are mounted at the first mounting block 2.1.4 to obtain a first brake assembly. On this basis, the first brake assembly, the second mounting block 2.1.5, and the upper cover assembly are all mounted to the second cover plate 1 as the main body 8.

An opening for the swing rod to pass through is provided on the left side of the first cover plate 3.1 and the second cover plate 1. It should be noted that the fall protection apparatus in this embodiment of the present invention includes a double locking structure that includes a swing rod and a lock block, and a centrifugal locking structure that triggers locking based on the descent speed of the fall protection apparatus. The double locking structure may be any structure disclosed in the prior art, which is not repeated herein.

The process of mounting the fall protection apparatus to the steel wire rope ensures the normal mounting of the fall protection apparatus. When the fall protection apparatus is mounted reversely, the problem occurs that the rope clamping member 3.2 cannot be opened. Alternatively, after the rope clamping member 3.2 is opened, the fall protection apparatus is mounted reversely and the rope clamping member 3.2 cannot be locked tightly. One hand presses the brake assembly from a side on which the second cover plate 1 is located and the other hand operates the shifting button 3.3 from a side on which the first cover plate 3.1 is located to drive the rope clamping member 3.2 to be unlocked, thus mounting the fall protection apparatus to the steel wire rope. After the hands are off, the rope clamping member 3.2 automatically switches to the locking position, so as to fix the fall protection apparatus to the steel wire rope. Similarly, the fall protection apparatus can be disassembled from the steel wire rope by pressing the brake assembly and operating the shifting button 3.3.

The foregoing implementations are only used for describing the present invention, and are not intended to limit the present invention. Although the present invention is described in detail with reference to the embodiments, those of ordinary skill in the art should understand that various combinations, modifications, or equivalent substitutions may be made to the technical solutions of the present invention without departing from the spirit and scope of the technical solutions of the present invention, and such modifications or equivalent substitutions should be encompassed within the scope of the claims of the present invention.

## Claims

1. A fall protection apparatus, **characterized by** comprising:
a first cover plate and a second cover plate opposite each other;
a rope clamping member located between the first cover plate and the second cover plate, wherein the rope clamping member is provided with a limit groove, and the rope clamping member is provided with a locking position and an unlocking position;
a shifting button, wherein a first end of the shifting button is fixedly connected to the rope clamping member, and a second end of the shifting button penetrates through the first cover plate and is at least partially exposed from the first cover plate; and
a brake assembly, wherein the brake assembly comprises a pressing portion, a connecting portion, and a brake portion that are connected sequentially, and the pressing portion is at least partially exposed from the second cover plate; wherein
when the brake assembly is in an initial state, the brake portion limitedly fits with the limit groove to fix the rope clamping member; and when the brake assembly is in a pressed state, the brake portion is separated from the limit groove and the shifting button is suitable for driving the rope clamping member to switch between the locking position and the unlocking position.

2. The fall protection apparatus according to claim 1, **characterized in that** the fall protection apparatus further comprises a mounting block, the pressing portion, the connecting portion, and the brake portion are mounted at the mounting block, and the mounting block is mounted in correspondence to an end portion of the first cover plate and an end portion of the second cover plate.

3. The fall protection apparatus according to claim 2, **characterized in that** a first protrusion and a second protrusion are respectively formed at edges on two opposite sides of the mounting block, the first protrusion is connected to an edge of the first cover plate, and the second protrusion is connected to an edge of the second cover plate.

4. The fall protection apparatus according to claim 2, **characterized in that** the connecting portion is sleeved with a first elastic member, and the first elastic member has a first end abutting against the mounting block and a second end abutting against the pressing portion; and in the pressed state, the first elastic member is elastically deformed.

5. The fall protection apparatus according to claim 2, **characterized in that** the rope clamping member is connected to one end of a second elastic member, and the other end of the second elastic member abuts against the first cover plate; and
the mounting block is provided with a stop plate, and an accommodating chamber of the second elastic member is formed between the stop plate and the first cover plate.

6. The fall protection apparatus according to any one of claims 2 to 5, **characterized in that** the mounting block comprises a first mounting block disposed at the top of the first cover plate and the second cover plate and a second mounting block disposed at the bottom of the first cover plate and the second cover plate; and
the pressing portion, the connecting portion, and the brake portion are mounted at the first mounting block and/or the second mounting block.

7. The fall protection apparatus according to claim 6, **characterized in that** one of the mounting block and the rope clamping member is provided with a pin shaft, and the other is provided with slots, and the pin shaft is suitable for partially entering the slot when the fall protection apparatus is mounted reversely.

8. The fall protection apparatus according to claim 7, **characterized in that** the slots are provided at an end of the rope clamping member close to the second mounting block, and the pin shaft is movably disposed at the second mounting block.

9. The fall protection apparatus according to claim 8, **characterized in that** the slots comprise a first slot and a second slot, wherein at the locking position, the first slot corresponds to the pin shaft, and at the unlocking position, the second slot corresponds to the pin shaft.

10. The fall protection apparatus according to any one of claims 1 to 5, **characterized in that** the pressing portion, the connecting portion, and the brake portion are all cylinder-shaped, and a diameter of the connecting portion is smaller than a diameter of the pressing portion and a diameter of the brake portion.
